# EUROPÄISCHE PATENTSCHRIFT

(11) **EP 1 431 126 B1**
(45) Veröffentlichungstag und Bekanntmachung des Hinweises auf die Patenterteilung: **28.06.2006**
(21) Anmeldenummer: 03026863.5
(22) Anmeldetag: 20.11.2003
(51) Int. Cl.: B60R 13/08, F16L 59/08, F16L 59/02

(54) **Isolationsschicht für ein thermisch belastetes Bauteil**
Insulation layer for a thermally loaded component
Couche d'isolation pour une pièce a sollicitation thérmique

(30) Priorität: 19.12.2002 DE 10259487
(43) Veröffentlichungstag der Anmeldung: 23.06.2004
(73) Patentinhaber: Bayerische Motoren Werke Aktiengesellschaft, 80809 München (DE)
(72) Erfinder: Bednarek, Henryk, 86899 Landsberg (DE); Dimoulas, Gergios, 86368 Gersthofen (DE)

(56) Entgegenhaltungen:
- EP-A- 0 439 432
- DE-A- 4 437 424
- DE-A- 19 533 564
- DE-A- 19 622 865
- US-A- 5 550 338

## Beschreibung

Die Erfindung bezieht sich auf ein Verfahren zum Herstellen einer Isolationsschicht sowie auf ein thermisch belastetes, mit einer derart hergestellten Isolationsschicht versehenes Bauteil, nach dem Oberbegriff des Patentanspruchs 1 bzw. 5.

Es ist aus der EP 1 207 081 A2 bekannt, thermisch belastete Bau-, und insbesondere Kraftfahrzeug-Karosserieteile mit einer Isolationsschicht zu versehen, welche aus einem Gemisch aus hydrophoben Aerogelpartikeln und einem auf der Bauteiloberfläche haftenden Bindemittel besteht, welches in Form eines unter gleichzeitiger Zumischung der Aerogelpartikel aufgespritzten Sprühnebels auf das Bauteil aufgetragen wird. Auf diese Weise bleibt die Offenporigkeit der Aerogelpartikel auch in der Bindemittelstruktur erhalten, so dass die Isolationsschicht zusätzlich zu einer hochgradigen Wärmedämmung auch einen wirksamen Schall- und Feuchtigkeitsschutz bietet.

Zur Verbesserung der Wärmedämmung kann nach der DE 195 33 564 A1 auf der Isolationsschicht nachträglich noch eine wärmestrahlungsreflektierende Metallfolie mit dem gleichen Bindemittel wie das der Isolationsschicht aufgeklebt werden. Eine derartige Metallfolie beeinträchtigt jedoch aufgrund ihrer fehlenden Porosität das Schallabsorptions- und, da sie als Dampfsperre wirkt, auch das Diffusionsvermögen der Isolationsschicht.

Aufgabe der Erfindung ist es, ein Verfahren und ein Bauteil der eingangs genannten Art so zu gestalten, dass die Wärmeschutzwirkung auf herstellungsmäßig einfache Weise verbessert wird und sich dennoch die Schallschutz- und Diffusionseigenschaften der Isolationsschicht im Wesentlichen unverändert beibehalten lassen.

Diese Aufgabe wird erfindungsgemäß durch das im Patentanspruch 1 angegebene Verfahren bzw. das im Patentanspruch 5 gekennzeichnete Bauteil gelöst.

Erfindungsgemäß wird als strahlungsreflektierende Beschichtung ein Metallpartikel-/Bindemittelgemisch vorzugsweise in Form eines Sprühnebels unmittelbar auf die noch unausgehärtete Isolationsschicht aufgetragen und dadurch eine störende Grenzflächenbildung in der Bindemittelstruktur zwischen Isolations- und Deckschicht wirksam unterbunden und der Fertigungsprozess insoweit vereinfacht, als sich die metallische Deckschicht problemlos auch auf geometrisch verwickelte Strukturen auftragen lässt und die sonst beim Aufkleben einer Metallfolie bis zum Aushärten der Isolationsschicht erforderlichen Wartezeiten entfallen, mit dem besonderen Effekt, dass sich die offenporige Bindemittelstruktur der Isolationsschicht gleichermaßen auch in der metallischen Deckschicht fortsetzt und somit das hohe Schallschutz- und Diffusionsvermögen der Isolationsschicht ungeschmälert erhalten bleibt.

Als Bindemittel wird vorzugsweise ein dauerfester, niedrigviskoser Klebstoff auf Acrylatbasis gewählt, der eine hohe Hitzebeständigkeit aufweist, rasch ausgeliert und sich leicht als feiner Sprühnebel auftragen lässt.

Die Erfindung wird nunmehr anhand eines in den Figuren schematisch dargestellten Ausführungsbeispiels näher erläutert. Es zeigen:
- **Fig. 1**: eine Kraftfahrzeug-Lenkspindel beim Auftragen der Isolations- und Deckschicht; und;
- **Fig. 2**: eine vergrößerte, jedoch nicht maßstabsgerechte Teilansicht der mit der Isolations- und der Deckschicht versehenen Lenkspindel.

Das in den Fig. dargestellte Bauteil, etwa eine im eingebauten Zustand katalysatornahe Lenkspindel 1 eines Kraftfahrzeugs, wird zum Zwecke des Wärme-, aber auch des Feuchtigkeits- und Schallschutzes zumindest in den höher belasteten Bereichen mit einer Isolationsschicht 2 belegt, welche aus feinen, hydrophoben Aerogelpartikeln 3 aufgebaut ist, die eine offenporige SiO₂-Gitter struktur mit Porenweiten zwischen 5 und 50 nm und ein Raumgewicht von etwa 100 g/l besitzen. Ein derartiges Aerogelgranulat ist sehr gut wärme- und schalldämmend, äußerst hitzebeständig, feuchtigkeitsabweisend und umweltverträglich. Eingebettet sind die Aerogelpartikel 3 in eine filigrane Tragstruktur 4, welche aus einem Bindemittel in Form eines wasserlöslichen, im ausgehärteten Zustand temperaturbeständigen und auf der mit der Isolationsschicht 2 belegten Oberfläche gut haftenden Klebstoffs, z.B. auf Acrylatbasis, hergestellt ist.

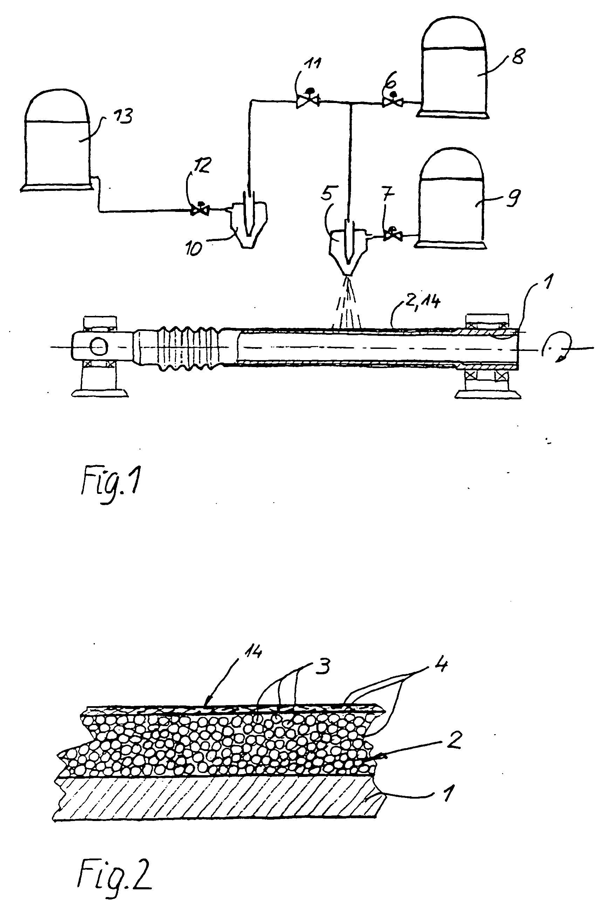

Wie Fig. 1 zeigt, wird die Isolationsschicht 2 unter kontinuierlicher Drehung der Lenkspindel 1 mittels einer Zweikomponenten-Spritzpistole 5, die über Dosierventile 6 und 7 an einen Vorratsbehälter 8 für die Klebstofflösung und einen Granulatbehälter 9 angeschlossen ist, in Form eines aus den Aerogelpartikeln und der gleichzeitig in feiner Verteilung zugemischten Klebstofflösung bestehenden Sprühnebels unmittelbar auf die Lenkspindel 1 aufgespritzt. Aufgrund der geringen Gelierzeiten des Bindemittels 4 lagert sich der Sprühnebel als zunächst zwar noch weiche, aber ausreichend formstabile Beschichtung auf der Lenkspindel 1 ab, und wegen der hydrophoben Oberflächenbeschaffenheit der Aerogelpartikel 3 kann das Bindemittel 4 die Oberfläche des Aerogelgranulats nicht benetzen, sondern bildet unter Beibehalt der Tröpfchenstruktur eine den Aerogelpartikeln 3 entsprechend offenporige Klebstoffmatrix, so dass die entstehende Isolationsschicht 2 eine geringe Wärmeleitfähigkeit besitzt und stark schallabsorbierend und aufgrund des hohen Diffusionsvermögens feuchtigkeitsabweisend wirkt, wobei der Klebstoffanteil am Gesamtvolumen etwa 5 bis 15% beträgt.

Nach Erreichen der erwünschten Schichtdicke der Isolationsschicht 2, die je nach Anwendungsfall zwischen 3 und 5 mm beträgt, wird die vorzugsweise robotergesteuerte Spritzpistole 5 abgeschaltet und eine weitere, ebenfalls robotergesteuerte Zweikomponenten-Spritzpistole 10 aktiviert, die über Dosierventile 11 und 12 an den Klebstoffbehälter 8 und einen Vorratsbehälter 13 für strahlungsreflektierende Metall-, etwa Aluminiumpartikel angeschlossen ist und durch die nunmehr ein Sprühnebel, bestehend aus dem Bindemittel in fein verteilter Tröpfchenform und den gleichzeitig zugemischten Metallpartikeln, auf die noch "nasse" Isolationsschicht 2 aufgespritzt wird, d.h. während sich deren Bindemittel 4 im erst angelierten Zustand befindet. Auf diese Weise wird eine strahlungsreflektierende, metallische Deckschicht 14 mit einer Dicke im µ-Bereich und einer ebenfalls offenporigen, sich homogen mit dem Bindemittel der Isolationsschicht 2 verbindenden Bindemittelstruktur 4 aufgebaut, durch die die thermische Isolationswirkung ohne Beeinträchtigung der Diffusions- und Schallabsorptionsfähigkeit der Isolationsschicht 2 deutlich verbessert wird.

## Patentansprüche

1. Verfahren zum Herstellen einer Isolationsschicht (2) für ein thermisch belastetes Bauteil, insbesondere für die katalysatornahe Lenkspindel (1) eines Kraftfahrzeugs, bei dem ein Gemisch aus hydrophoben Aerogelpartikeln (3) und einem auf der Bauteiloberfläche haftenden Bindemittel (4) auf das Bauteil aufgetragen und anschließend die Isolationsschicht (2) mit einer wärmestrahlungsreflektierenden, metallischen Deckschicht (14) belegt wird, **dadurch gekennzeichnet, dass**
ein aus strahlungsreflektierenden Metallpartikeln und dem gleichen Bindemittel (4) wie das der Isolationsschicht (2) bestehendes Gemisch im unausgehärteten Zustand des Bindemittels der Isolationsschicht auf diese als Deckschicht (14) aufgetragen wird.

2. Verfahren nach Anspruch 1, **dadurch gekennzeichnet, dass**
das Bindemittel (4) in Form eines unter gleichzeitiger Zumischung der Metallpartikel aufgespritzten Sprühnebels auf die Isolationsschicht (2) aufgetragen wird.

3. Verfahren nach Anspruch 1 oder 2, **dadurch gekennzeichnet, dass**
als Bindemittel (4) ein warmfester, niedrigviskoser Klebstoff verwendet wird.

4. Verfahren nach Anspruch 3, **dadurch gekennzeichnet, dass**
als Bindemittel (4) eine wässrige Klebstofflösung auf Acrylatbasis verwendet wird.

5. Thermisch belastetes Bauteil, insbesondere katalysatornahe Lenkspindel (1) eines Kraftfahrzeugs, mit einer auf die Bauteiloberfläche aufgebrachten, aus einem im ausgehärteten Zustand auf dieser haftenden Bindemittel (4) und in dieses als Matrix eingebetteten, hydrophoben Aerogelpartikeln (3) bestehenden Isolationsschicht (2) und einer wärmestrahlungsreflektierenden, auf der Isolationsschicht befestigten, metallischen Deckschicht (14), **dadurch gekennzeichnet, dass**
die Deckschicht (14) aus einem im unausgehärteten Zustand des Bindemittels der Isolationsschicht (2) auf diese aufgebrachten Gemisch aus strahlungsreflektierenden Metallpartikeln und dem gleichen Bindemittel (4) wie das der Isolationsschicht besteht.

6. Thermisch belastetes Bauteil nach Anspruch 5, **dadurch gekennzeichnet, dass**
das Bindemittel (4) der Isolations- und der Deckschicht (2, 14) im ausgehärteten Zustand eine offenporige Schaumstoffstruktur besitzt.

## Claims

1. A method of producing an insulating layer (2) for a thermally stressed component, especially for the steering gear shaft (1) of a motor vehicle near the catalytic converter, wherein a mixture of hydrophobic aerogel particles (3) and a binder (4) adhering to the surface of the component is applied to the component, after which the insulating layer (2) is coated with a thermal radiation-reflecting metal cover layer (14), **characterised in that**
a mixture comprising radiation-reflecting metal particles and the same binder (4) as in the insulating layer (2) is applied as a covering layer (14) to the insulating layer before the binder in the insulating layer has set.

2. A method according to claim 1, **characterised in that**
the binder (4) applied to the insulating layer (2) is in the form of a spray applied with simultaneous mixing of the metal particles.

3. A method according to claim 1 or claim 2, **characterised in that**
the binder (4) is a heat-resistant low-viscosity adhesive.

4. A method according to claim 3, **characterised in that**
the binder (4) is an aqueous acrylate-based adhesive solution.

5. A thermally stressed component, especially the steering gear shaft (1) of a motor vehicle near the catalytic converter, comprising an insulating layer (2) applied to the surface of the component and comprising a binder (4) which adheres the said surface after hardening and hydrophobic aerogel particles (3) embedded in the binder as a matrix and also comprising a thermal radiation-reflecting metal cover layer (14) fastened to the insulating layer, **characterised in that**
the cover layer (14) comprises the same binder (4) as in the insulating layer, together with a mixture of radiation-reflecting metal particles applied to the insulating layer (2) in the state before the binder has set.

6. A thermally stressed component according to claim 5, **characterised in that**
the binder (4) in the insulating and the cover layer (2, 14) has an open-pore foam structure after setting.

## Revendications

1. Procédé de fabrication d'une couche d'isolation (2) pour un composant à sollicitation thermique, notamment pour l'arbre de direction (1) d'un véhicule, proche du catalyseur, selon lequel on applique un mélange de particules hydrophobes d'aérogel (3) et d'un liant (4) adhérant à la surface du composant sur le composant et on recouvre finalement la couche d'isolation (2) d'une couche de revêtement (14) métallique réfléchissant le rayonnement thermique,
**caractérisé en ce qu'**
un mélange composé de particules métalliques réfléchissant les rayonnements et du même liant (4) que celui de la couche d'isolation (2) est appliqué sur celle-ci à l'état non durci du liant de la couche d'isolation en tant que couche de revêtement (14).

2. Procédé selon la revendication 1,
**caractérisé en ce que**
le liant (4) est appliqué sur la couche d'isolation (2) sous la forme d'un brouillard de fines gouttelettes vaporisé en mélangeant simultanément les particules métalliques.

3. Procédé selon la revendication 1 ou 2,
**caractérisé en ce qu'**
on utilise comme liant (4) une colle résistant à la chaleur et de faible viscosité.

4. Procédé selon la revendication 3,
**caractérisé en ce qu'**
on utilise comme liant (4) une solution aqueuse de colle sur une base d'acrylate.

5. Composant à sollicitation thermique, notamment arbre de direction (1) d'un véhicule proche du catalyseur, doté d'une couche d'isolation (2) appliquée à la surface du composant et composée d'un liant (4) adhérant à cette surface à l'état durci et de particules hydrophobes d'aérogel (3) enrobées sous forme de matrice, et doté en outre d'une couche de revêtement métallique (14) réfléchissant le rayonnement thermique et fixée à la couche d'isolation,
**caractérisé en ce que**
la couche de revêtement (14) se compose d'un mélange de particules métalliques réfléchissant les rayonnements appliqués sur la couche d'isolation (2) à l'état non durci du liant de celle-ci et du même liant (4) que celui de la couche d'isolation.

6. Composant à sollicitation thermique selon la revendication 5,
**caractérisé en ce que**
le liant (4) de la couche d'isolation et de surface (2, 14) présente une structure moussante à pores ouverts à l'état durci.
